# EUROPEAN PATENT APPLICATION

(11) **EP 1 188 793 A1**
(43) Date of publication of application: **20.03.2002**
(21) Application number: 01908266.8
(22) Date of filing: 02.03.2001
(51) Int. Cl.: C08L 69/00, C08G 64/08, C08J 5/00

(54) **FLAME-RETARDANT POLYCARBONATE RESIN COMPOSITION AND MOLDED ARTICLE**

(30) Priority: 27.03.2000 JP 2000085576
(71) Applicant: IDEMITSU PETROCHEMICAL CO., LTD., Tokyo 130-0015 (JP)
(72) Inventor: ISOZAKI, Toshio, Ichihara-shi, Chiba 299-0107 (JP)
(74) Representative: Gille Hrabal Struck Neidlein Prop Roos
(86) International application number: JP0101639
(87) International publication number: WO0172899

(57) **Abstract**

Provided is a non-halogen, flame-retardant polycarbonate resin composition that comprises a resin mixture of (A) from 60 to 99 % by mass of a polycarbonate resin and (B) from 1 to 40 % by mass of a polycarbonate copolymer having phosphorus atoms in its main chain, and contains (C) from 0.02 to 5 parts by mass, relative to 100 parts by mass of the resin mixture, of an anti-dripping agent. Also provided are moldings of the composition. The polycarbonate copolymer (B) that has phosphorus atoms in its main chain is typically a polycarbonate copolymer of which the repetitive structural units contain an aromatic organophosphate component. The resin moldings have good impact resistance, good heat resistance and high stiffness intrinsic to polycarbonate resin. Not depositing on the wall of molds, the melt of the resin composition is well flowable and is stably molded into high-quality moldings having good appearance, and its long-run workability is good.

## Description

### TECHNICAL FIELD

The present invention relates to a flame-retardant polycarbonate resin composition. Precisely, the invention relates to a high-level, flame-retardant polycarbonate resin composition with no halogen, which has good melt flowability and can be stably molded even in long-run molding lines, not depositing so much to molds, and also relates to moldings of the composition having good impact resistance, high stiffness and good heat resistance.

### BACKGROUND ART

As having the advantages of impact resistance, heat resistance, good electric properties and dimensional stability or the like, polycarbonate resins have many applications in various fields of, for example, OA (office automation) equipment, information and communication appliances, other electric and electronic appliances for industrial use and household use, automobile parts and building materials. As a rule, polycarbonate resins are self-extinguishable. However, in some fields of OA equipment, information and communication appliances, and other electric and electronic appliances, it is desirable that the level of the flame retardancy of polycarbonate resin products is increased for ensuring further safety of the products.

For improving the flame retardancy of polycarbonate resins, halogen-containing flame retardants such as bisphenol A halides and halogenated polycarbonate oligomers have been used along with a flame retardation promoter such as antimony oxide, as their flame-retarding ability is good. However, with the recent tendency toward safety living and environmental protection from discarded and incinerated wastes, the market requires flame retardation with non-halogen flame retardants. Polycarbonate resin compositions containing, as a non-halogen flame retardant, any of phosphorus-containing organic flame retardants, especially organic phosphate compounds have good flame retardancy. In addition, organic phosphate compounds serve as a plasticizer, and various types of compositions containing them have been proposed.

In order to make polycarbonate resins resistant to flames by adding thereto a phosphate compound, a relatively large amount of the compound must be added to the resins. In general, polycarbonate resins require relatively high molding temperatures, as their melt viscosity is high. Therefore, for molding them into thin-walled and large-sized moldings, the molding temperature will have to be further higher. For these reasons, phosphate compounds often cause some problems when added to such polycarbonate resins, though their flame-retarding ability is good. For example, phosphate compounds often adhere to and corrode molds used for molding resins containing them, and generate gas to have some unfavorable influences on the working environments and the continuous moldability of resins, and even on the appearance of the resin moldings. Another problem with phosphate compounds is that, when the moldings containing them are left under heat or in high-temperature and high-humidity conditions, the compounds lower the impact strength of the moldings and yellow the moldings. On the other hand, the recent tendency in the art is toward recycling resin products for saving natural resources . However, as not stable under heat, phosphate compounds are against the requirement for recycling resin products containing them. This is still another problem with phosphate compounds.

Moreover, though good for non-halogen flame retardants, phosphate compounds often lower the impact resistance of polycarbonate resin compositions containing them. To solve the problems, proposed are many flame-retardant polycarbonate resin compositions additionally containing a rubber-modified resin or a rubbery polymer such as ABS resin or HIPS resin. In addition, also proposed are various techniques of using improved phosphates having an increased molecular mass and an elevated melting point and therefore having improved heat resistance.

In Japanese Patent Laid-Open No. 86746/1978, proposed is a plasticized polycarbonate composition, which comprises a mixture of a high-molecular-mass aromatic polycarbonate resin polymer, and a small amount of an organic phosphate of an oligomer-polymer type composed of aromatic phosphate units alone or comprising aromatic phosphate units and aromatic polycarbonate units. This laid-open patent publication indicates that the organic phosphate added to the resin composition lowers the melt viscosity of the composition and therefore improves the moldability thereof, not interfering with the impact strength of the moldings of the composition. However, the amount of the organic phosphate added to the resin composition is small, for example, it is at most 1 part by mass relative to 100 parts by mass of the polycarbonate resin in the composition, as in the Examples given in the publication. The publication says nothing about the flame retardancy of the resin composition.

In the current situation as above, the object of the present invention is to make polycarbonate resins resistant to flames by adding thereto a non-halogen compound, and to provide a flame-retardant polycarbonate resin composition which has good flowability (injection moldability) and therefore can be stably molded even in long-run molding lines not adhering so much to molds, to give high-quality moldings having good appearance. The invention also provides moldings of the resin composition that are highly resistant to flames and have good impact resistance, good heat resistance and high stiffness intrinsic to polycarbonate resins.

### DISCLOSURE OF THE INVENTION

To attain the object of the invention, we, the present inventors have assiduously studied how to make polycarbonate resins resistant to flames in a favorable manner and how to improve the moldability and the flame retardancy of polycarbonate resins not interfering with the impact resistance, the heat resistance and the stiffness intrinsic to the resins. As a result, we have found that, when a specific polycarbonate copolymer is combined with an anti-dripping agent and added to a polycarbonate resin, then the resulting resin composition has good moldability and can be molded into high-quality moldings having good flame retardancy, good impact resistance, good heat resistance and good recyclability. On the basis of this finding, we have completed the present invention.

Specifically, the invention provides the following:
(1) A flame-retardant polycarbonate resin composition which comprises a resin mixture of (A) from 60 to 99 % by mass of a polycarbonate resin and (B) from 1 to 40 % by mass of a polycarbonate copolymer having phosphorus atoms in its main chain, and contains (C) from 0.02 to 5 parts by mass, relative to 100 parts by mass of the resin mixture, of an anti-dripping agent.
(2) The flame-retardant polycarbonate resin composition of (1), wherein the polycarbonate copolymer (B) that has phosphorus atoms in its main chain is an organic phosphate-containing polycarbonate copolymer of the following formula (1) : 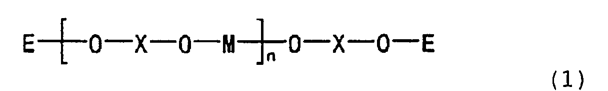 in which X represents a dihydroxy-aromatic residue; E represents a hydrogen atom, or -M-O-Ar; Ar represents an aromatic group; M represents a bonding part of the following formula (2): 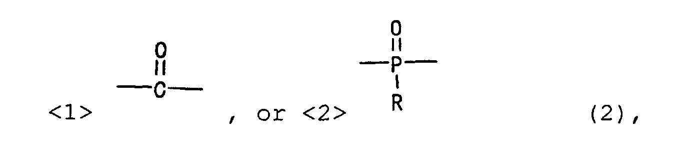 R is selected from an alkyl group having from 1 to 15 carbon atoms, an aryl group having from 6 to 14 carbon atoms, an alkoxy group having from 1 to 30 carbon atoms, and an aryloxy group having from 6 to 14 carbon atoms; the molar ratio of the bonding parts <1> to <2> falls between 95/5 and 5/95; and n falls between 20 and 400.
(3) The flame-retardant polycarbonate resin composition of (1) or (2), wherein the anti-dripping agent (C) is at least one member selected from the group consisting of fluororesins, silicone resins and phenolic resins.
(4) The flame-retardant polycarbonate resin composition of any of (1) to (3), which further contains (D) from 1 to 30 parts by mass of a rubbery polymer, relative to 100 parts by mass of the resin mixture of (A) and (B) therein.
(5) The flame-retardant polycarbonate resin composition of above (4), wherein the rubbery polymer (D) is a core/shell-type, grafted rubbery polymer.
(6) The flame-retardant polycarbonate resin composition of any of (1) to (5), which further contains (E) from 1 to 40 parts by mass of a styrene resin, relative to 100 parts by mass of the resin mixture of (A) and (B) therein.
(7) The flame-retardant polycarbonate resin composition of any of (1) to (6), which further contains (F) from 1 to 100 parts by mass of an inorganic filler, relative to 100 parts by mass of the resin mixture of (A) and (B) therein.
(8) Moldings of the flame-retardant polycarbonate resin composition of any of (1) to (7).
(9) Moldings of (8), which are for housings or parts of electric and electronic appliances.
(10) Moldings of (8), which are for parts of development units, fixation units and paper receiver units of duplicators or printers.

### BEST MODES OF CARRYING OUT THE INVENTION

The invention is described in detail hereinunder.

### (A) Polycarbonate Resin:

The polycarbonate resin (PC) to be in the resin composition of the invention is not specifically defined, and may be any and every one known in the art. Generally used herein are aromatic polycarbonates to be produced from diphenols and carbonate precursors. For example, herein used are polycarbonates produced by reacting a diphenol and a carbonate precursor in a solution method or in a melt method, such as those produced through reaction of a diphenol and phosgene or through interesterification of a diphenol and a diphenyl carbonate.

Various diphenols are usable, typically including bis(hydroxyphenyl)alkanes such as 2,2-bis(4-hydroxyphenyl)propane [bisphenol A], bis(4-hydroxyphenyl)methane, 1,1-bis(4-hydroxyphenyl)ethane, 2,2-bis(4-hydroxy-3,5-dimethylphenyl)propane, etc.; and also 4,4'-dihydroxydiphenyl, bis(4-hydroxyphenyl)cycloalkanes, bis(4-hydroxyphenyl) oxide, bis(4-hydroxyphenyl) sulfide, bis(4-hydroxyphenyl) sulfone, bis(4-hydroxyphenyl) sulfoxide, bis(4-hydroxyphenyl) ether, bis(4-hydroxyphenyl) ketone, hydroquinone, resorcinol, catechol, etc. One or more of these diphenols may be used either singly or as combined.

As the diphenols for use herein, preferred are bis(hydroxyphenyl)alkanes, especially those consisting essentially of bisphenol A. The carbonate precursors for use in the invention include, for example, carbonyl halides, carbonates and haloformates, concretely, phosgene, diphenol dihaloformates, diphenyl carbonate, dimethyl carbonate, and diethyl carbonate.

The polycarbonate resin may have a branched structure, for which the branching agent includes, for example, 1,1,1-tris(4-hydroxyphenyl)ethane, α,α',α"-tris(4-hyroxyphenyl)-1,3,5-triisopropylbenzene, phloroglucine, trimellitic acid, and isatin-bis(o-cresol). For controlling the molecular mass of the polycarbonate resin, for example, employable are phenol, p-t-butylphenol, p-t-octylphenol, and p-cumylphenol.

The polycarbonate resin for use in the invention may be a copolymer having a polycarbonate moiety and a polyorganosiloxane moiety, or may also be a polycarbonate resin containing a copolymer of the type. Further, it may also be a polyester-polycarbonate resin to be produced through polymerization of a polycarbonate in the presence of an ester precursor, such as a difunctional carboxylic acid (e.g., terephthalic acid) or its ester-forming derivative. Various types of different polycarbonate resins may be mixed to give mixed polycarbonate resins for use in the invention. Preferably, the polycarbonate resin for the component (A) in the invention does not substantially contain halogen in its structure. In view of its mechanical strength and moldability, the polycarbonate resin preferably has a viscosity-average molecular mass of from 10,000 to 100,000, more preferably from 11,000 to 40,000, even more preferably from 12,000 to 30,000.

### (B) Polycarbonate Copolymer having phosphorus atoms in its main chain:

For use in the invention, the polycarbonate copolymer (B) having phosphorus atoms in its main chain is not specifically defined, including, for example, polycarbonate copolymers having a phosphate component. However, from the heat resistance and the stiffness of the flame-retardant polycarbonate resin composition containing it, preferred are polycarbonate copolymers comprising an aromatic phosphate component and an aromatic polycarbonate component of the following formula (1): 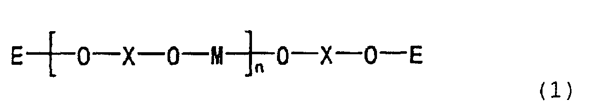 wherein X represents a dihydroxy-aromatic residue; E represents a hydrogen atom, or -M-O-Ar; Ar represents an aromatic group; M represents a bonding part of the following formula (2): 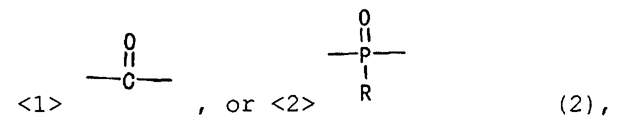 R is selected from an alkyl group having from 1 to 15 carbon atoms, an aryl group having from 6 to 14 carbon atoms, an alkoxy group having from 1 to 30 carbon atoms, and an aryloxy group having from 6 to 14 carbon atoms; the molar ratio of the bonding parts <1> to <2> falls between 95/5 and 5/95; and n falls between 20 and 400.

For the aromatic dihydroxy compound to be the dihydroxy-aromatic residue in formula (1), referred to are the compounds mentioned hereinabove for the polycarbonate resin.

For the aromatic polycarbonate copolymer containing such an aromatic phosphate, herein usable are those produced in known methods (for example, as in Japanese Patent Publication Nos. 34889/1988, 35009/1989). For example, the copolymer may be obtained by reacting a diaryl carbonate such as diphenyl carbonate and diphenyl phosphate or triphenyl phosphate with a diphenol in a mode of melt-phase transesterification. The reaction may be effected at a temperature falling between 200 and 350°C in the presence of a known transesterification catalyst, while separating monohydroxyaryls under reduced pressure.

For the transesterification, a low-molecular-mass polycarbonate that is prepared from diphenyl carbonate and bisphenol A may be reacted with diphenyl phosphate added thereto. The starting compounds for the transesterification are not specifically defined and may be selected in any desired manner depending on the composition of the copolymer to be produced. In general, the molar ratio of the diaryl carbonate to the diaryl phosphate falls between 5/95 and 95/5, preferably between 15/85 and 85/15; and the molar ratio of the diphenol to the total of the diaryl carbonate and the diallyl phosphate falls between 0.9/1 and 0.99/1, preferably 0.99/1. From the starting compounds combined in such a blend ratio, obtained are copolymers having the above-mentioned composition. The copolymer may have a number-average molecular mass of from 5, 000 to 100,000, preferably from 10,000 to 50,000 or so.

Concretely, R in the phosphate units constituting the copolymer includes an alkyl group having from 1 to 15 carbon atoms, such as methyl, ethyl, propyl and butyl groups; an unsubstituted aryl group; an aryl group substituted with 1 to 5 such alkyl groups; an alkoxy group preferably having from 6 to 14 carbon atoms, such as methoxy, ethoxy, propoxy and butoxy groups; an unsubstituted aryloxy group; and an aryloxy group substituted with 1 to 5 alkyl groups mentioned above. For the polycarbonate units constituting the copolymer, bisphenol A-type units are the most popular.

In the bisphenol A-type, phosphate-containing polycarbonate copolymers, the phosphate units and the carbonate units may be copolymerized at random or in blocks. Preferably, however, the units are copolymerized in blocks in some degree, as the polycarbonate resin combined with such a block copolymer can readily keep good heat resistance and good impact resistance intrinsic thereto.

The phosphorus-containing polycarbonate copolymer that is most popularly used in the invention is a polycarbonate copolymer having repetitive units of the following formula (3) : 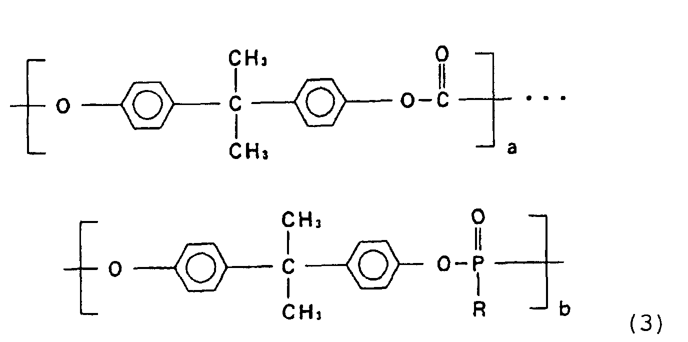 wherein R has the same meaning as in formula (2); a and b each are an integer of from 1 to 200; a/b falls between 95/5 and 5/95, preferably between 60/40 and 20/80.

In formula (3), a and b indicate that the copolymer comprises the illustrated repetitive units, and the polycarbonate units and the phosphate units may form plural blocks in the copolymer. As the case may be, these units may be bonded to each other via some other bonding means. The polycarbonate copolymer is terminated by E, as in formula (1).

### (C) Anti-dripping agent:

The anti-dripping agent for use in the invention is not specifically defined, so far as it has the ability to prevent the polycarbonate resin from melting and dripping from the resin moldings. For example, preferred for the anti-dripping agent are fluororesins, especially fluoro-olefin resins. Fluoro-olefin resins for use herein may be ordinary resins or copolymer resins having a fluoroethylene structure. For example, they include difluoroethylene resins, tetrafluoroethylene resins, tetrafluoroethylene-hexafluoropropylene copolymer resins, and copolymer resins of tetrafluoroethylene and an ethylenic monomer not containing fluorine. Preferred are polytetrafluoroethylene (PTFE) resins preferably having a mean molecular mass of at least 500, 000, more preferably from 500, 000 to 10,000,000.

Of such polytetrafluoroethylene resins, more preferred are those having the ability to form fibrils, as they ensure higher prevention of dripping. The fibril-forming polytetrafluoroethylene (PTFE) resins are not specifically defined, but preferred is PTFE of Type 3 stipulated in the ASTM Standard. Specific examples of PTFE of Type 3 include Teflon 6-J (from Mitsui-DuPont Fluorochemical), Polyflon D-1, Polyflon F-103, Polyflon F201 (all from Daikin Industries), and CD076 (from Asahi Glass Fluoropolymers).

Others than PTFE of Type 3 are also employable herein, including, for example, Argoflon F5 (fromMontefluos), Polyflon MPA and Polyflon FA-100 (both from Daikin Industries). These polytetrafluoroethylene (PTFE) resins may be used either singly or as combined. The fibril-forming polytetrafluoroethylene (PTFE) resins as above may be obtained, for example, by polymerizing tetrafluoroethylene in an aqueous solvent in the presence of sodium, potassium or ammonium peroxydisulfide, under a pressure of 1 MPa or so, at a temperature falling between 0 and 200°C, preferably between 20 and 100°C.

In addition to the fluoro-olefin resins, per-se known compounds are also usable for the anti-dripping agent. For example, silicone resins such as polyorganosiloxanes are usable, and they include polydimethylsiloxane resins, polymethylphenylsiloxane resins, polydiphenylsiloxane resins, polymethylethylsiloxane resins, and their copolymer resins. In addition, also preferred for the anti-dripping agent are modified silicone resins of which the terminals or the side chains of the molecular structure are substituted with any organic group of hydroxyl, amino, epoxy, carboxyl and mercapto groups.

The number-average molecular mass of the silicone resins may be at least 200, but preferably falls between 500 and 5,000,000. The morphology of the silicone resins is not specifically defined, and may be in any form of oils, varnishes, gums, powders and pellets.

Still other examples of the anti-dripping agent are phenolic resins, which may be obtained by reacting a phenol compound, such as phenol, cresol, xylenol or alkylphenol, with an aldehyde such as formaldehyde, paraformaldehyde or acetaldehyde, in the presence of a catalyst. The phenolic resins for use herein may be any of resol-type phenolic resins or novolak-type phenolic resins.

Phyllosilicates are also usable for the anti-dripping agent. They include, for example, smectite clay minerals such as montmorillonite and hectorite, and Na-type fluorotaeniolite.

The content of each component in the flame-retardant polycarbonate resin composition of the invention is described. The resin composition comprises a resin mixture of (A) from 60 to 99 % by mass, preferably from 70 to 97 % by mass of a polycarbonate resin and (B) from 1 to 40 % by mass, preferably from 3 to 30 % by mass of a polycarbonate copolymer having phosphorus atoms in its main chain.

The resin composition may further contain any other optional components of rubbery polymer, styrene resin and inorganic filler that are described hereinunder, and the blend ratio of the component (A) to (B) therein may be determined in consideration of the level of the desired flame retardancy and the physical properties of the resin moldings. For example, when the resinous ingredient of the composition is composed of the components (A) and (B), the flame retardancy and the physical properties of the moldings are all good even though the content of the component (B) is relatively low, for example, falling between 1 and 15 % by mass, but preferably between 3 and 10 % by mass. On the other hand, when the resin composition further contains a styrene resin and/or a rubbery polymer and optionally an inorganic filler that are described hereinunder, it is desirable that the content of the component (B) therein is relatively high, for example, falling between 2 and 40 parts by mass, but preferably between 5 and 30 parts by mass.

The content of the anti-dripping agent for the component (C) in the resin composition falls between 0.02 and 5 parts by mass, preferably between 0.02 and 2 parts by mass relative to 100 parts by mass of the resin mixture of the components (A) and (B) therein. If the content of the anti-dripping agent (C) in the resin composition is smaller than 0.02 parts by mass, the drip-preventing ability of the composition will be not enough for the intended flame retardancy of the composition. However, even if the content is larger than 5 parts by mass, the effect of the anti-dripping agent added could not be augmented any more, and such a large amount of the anti-dripping agent, if added to the composition, will have some negative influences on the impact resistance and the outward appearance of the moldings of the composition.

Therefore, the amount of the anti-dripping agent to be added to the composition may be suitably determined, depending on the necessary flame retardancy of the moldings of the composition, for example, based on V-0, V-1 or V-2 in UL-94, and depending on the content of the component (B) and also on the amount of the other constituent components.

In case where the moldings of the flame-retardant polycarbonate resin composition of the invention are desired to have higher flame retardancy, various types of flame retardants may be added to the composition. The flame retardants are not specifically defined, and may be any conventional ones. For example, any of organic phosphorus compounds, non-halogen phosphorus compounds, silicone compounds, halogen compounds, nitrogen compounds, metal hydroxides, red phosphorus, antimony oxide, or expanding graphite may be added to the composition, depending on the intended object of the invention.

The halogen compounds include, for example, tetrabromobisphenol A, halogenopolycarbonates, halogenopolycarbonate copolymers and oligomers, decabromodiphenyl ether, (tetrabromobisphenol)epoxy oligomers, halogenopolystyrenes, and halogenopolyolefins. The nitrogen compounds include, for example, melamine, and alkyl group or aromatic group-substituted melamines; and the metal hydroxides include, for example, magnesium hydroxide, and aluminium hydroxide.

Halogen-containing flame retardants are relatively effective, but are unfavorable, as often discharging harmful gases when resin compositions containing them are molded into moldings, or often corroding the molds used, or often discharging harmful substances when the moldings are incinerated. Therefore, preferred are non-halogen flame retardants, as they are safe and do not pollute the environment.

If desired, any of rubbery polymers, other thermoplastic resins and inorganic fillers may be added to the flame-retardant polycarbonate resin composition of the invention for further improving the impact resistance, the moldability, the stiffness, the chemical resistance and the flame retardancy of the resin composition and its moldings.

For the rubbery polymer (D), mentioned are various types of rubbery polymers to be used in the rubber-modified polystyrene resins described hereinunder. Above all, preferred are grafted rubbery polymers, which have a two-layered structure composed of a core and a shell and in which the core is of a flexible rubber material and the shell that covers the core is of a hard resin material. As a whole, the rubbery polymers themselves are powdery or granular. After blended with a polycarbonate resin in melt, the core/shell-type, grafted rubbery polymer mostly keeps its original powdery or granular condition. Since the grafted rubbery polymer keeps its original powdery or granular condition after having been blended with the resin melt, it can uniformly disperse in the resin composition and is effective for preventing the moldings of the resin composition from being troubled by surface layer peeling.

Known are various core/shell-type, grafted rubbery polymers that are usable herein. Commercially-available products of such rubbery polymers include, for example, Hiblen B621 (from Nippon Zeon), KM-330 (form Rohm & Haas), Metablen W529, Metablen S2001, Metablen C223, Metablen B621 (all from Mitsubishi Rayon).

For example, these may be produced through polymerization of one or more vinylic monomers in the presence of a rubbery polymer that is obtained from monomers of essentially alkyl acrylates or alkyl methacrylates and dimethylsiloxane. In the alkyl acrylates and acryl methacrylates, the alkyl group preferably has from 2 to 10 carbon atoms . Concretely, the alkyl acrylates and methacrylates include, for example, ethyl acrylate, butyl acrylate, 2-ethylhexyl acrylate, and n-octyl methacrylate. One example of the elastomers obtained from monomers of essentially those alkyl acrylates is a polymer to be prepared through reaction of at least 70 % by mass of the alkyl acrylates with at most 30 % by mass of other copolymerizable vinylic monomers such as methyl methacrylate, acrylonitrile, vinyl acetate, and styrene. To prepare the polymer, a polyfunctional monomer serving as a crosslinking agent, such as divinylbenzene, ethylene dimethacrylate, triallyl cyanurate, or triallyl isocyanurate, may be added to the polymerization system.

The vinylic monomers to be polymerized in the presence of a rubbery polymer include, for example, aromatic vinyl compounds such as styrene, α-methylstyrene; acrylates such as methyl acrylate, ethyl acrylate; and methacrylates such as methyl methacrylate, ethyl methacrylate. One or more these monomers may be (co)polymerized, as combined, or may be copolymerized with any other vinylic monomers such as vinyl cyanide compounds (e.g., acrylonitrile, methacrylonitrile), and vinyl esters (e.g., vinyl acetate, vinyl propionate) . The (co) polymerization may be effected in any known method of, for example, bulk polymerization, suspension polymerization, or emulsion polymerization. Preferred is emulsion polymerization.

It is desirable that the core/shell-type, grafted rubbery polymers thus produced in the manner mentioned above contain at least 20 % by mass of the rubbery polymer moiety. Typical examples of the core/shell-type, grafted rubbery polymers are MAS resins such as graft copolymers of styrene and methyl methacrylate with from 60 to 80 % by mass of n-butyl acrylate. Especially preferred are composite rubber graft copolymers to be prepared through grafting copolymerization of a composite rubber with at least one vinylic monomer, in which the composite rubber comprises from 5 to 95 % by mass of a polysiloxane rubber component and from 5 to 95 % by mass of a polyacryl (meth) acrylate rubber component as so entangled that they are not separated from each other, and has a mean particle size of from 0.01 to 1 µm or so. The composite rubber graft copolymers are better than single rubber graft copolymers, as their effect of improving the impact resistance of resin moldings is higher than that of the latter, single rubber graft copolymers. Commercial products of such composite rubber graft copolymers are available, for example, Metablen S-2001 from Mitsubishi Rayon.

For the other thermoplastic resin (E), herein usable are resins compatible with or dispersible in polycarbonate resin. For example, they include polyester resins such as polyethylene terephthalate and polybutylene terephthalate; polystyrene resins including simple polystyrene resins, rubber-modified polystyrene resins and syndiotactic structure-having polystyrene resins; polyphenylene-ether resins; polyphenylene-sulfide resins; polymethacrylate resins; and polyolefin resins such as polyethylene, polypropylene, polybutene and their copolymers.

Above all, the styrene resin (E) may be added to the flame-retardant polycarbonate resin composition of the invention for improving the melt flowability of the resin composition, or that is, for improving the moldability thereof, and for improving the impact resistance of the moldings of the composition. The styrene may be polymers that are prepared through polymerization of a monomer or monomer mixture of from 20 to 100 % by mass of a monovinylic aromatic monomer such as styrene or α-methylstyrene, from 0 to 60 % by mass of a vinyl cyanide-type monomer such as acrylonitrile or methacrylonitrile, and from 0 to 50 % by mass of any other vinylic monomer copolymerizable with those monomers, such as maleimide or methyl (meth)acrylate. The polymers include, for example, polystyrenes (GPPS), acrylonitrile-styrene copolymers (AS resins).

As the styrene resins, also preferably used herein are rubber-modified styrene resins. The rubber-modified styrene resins are preferably high-impact styrene resins that are produced through grafting polymerization of a rubbery polymer with at least styrene monomers. The rubber-modified styrene resins include, for example, high-impact polystyrenes (HIPS) produced through polymerization of rubber such as polybutadiene with styrene; ABS resins produced through polymerization of polybutadiene with acrylonitrile and styrene; MBS resins produced through polymerization of polybutadiene with methyl methacrylate and styrene. Mixtures of two or more different types of such rubber-modified styrene resins, as well as mixtures of the rubber-modified styrene resin with other styrene resins not modified with rubber such as those mentioned above are also usable in the invention.

In the rubber-modified styrene resins, the amount of rubber to modify them may fall, for example, between 2 and 50 % by mass, but preferably between 5 and 30 % by mass, more preferably between 5 and 15 % by mass. If the rubber content is smaller than 2 % by mass, the impact resistance of the resin moldings will be poor. If, on the other hand, it is larger than 50 % by mass, the thermal stability of the resin composition will be lowered, and the melt flowability thereof will be also lowered. If so, the resin composition will be unfavorably gelled or yellowed. Specific examples of the rubber include polybutadiene, acrylate and/or methacrylate-having rubbery polymers, styrene-butadiene-styrene (SBS) rubber, styrenebutadiene rubber (SBR), butadiene-acrylic rubber, isoprene rubber, isoprene-styrene rubber, isoprene-acrylic rubber, and ethylene-propylene rubber. Of those, especially preferred is polybutadiene. The polybutadiene usable herein may be any of low-cis polybutadiene (for example, having from 1 to 30 mol% of 1,2-vinyl bonds and from 30 to 42 mol% of 1,4-cis bonds) or high-cis polybutadiene (for example, having at most 20 mol% of 1, 2-vinyl bonds and at least 78 mol% of 1,4-cis bonds), and even their mixtures.

The content of the styrene resin (E) in the polycarbonate resin composition of the invention falls between 1 and 40 parts by mass, preferably between 2 and 30 parts by mass relative to 100 parts by mass of the resin mixture of the components (A) and (B) therein. If it is smaller than 1 part by mass, the intended moldability and the impact resistance of the resin composition and its moldings could not be well improved; but if larger than 40 parts by mass, the heat resistance and the stiffness thereof will lower. The amount of the styrene resin to be in the composition may be suitably determined, depending on the necessary properties of the moldings and the moldability of the composition, especially on the thickness of the moldings and the resin flow length of the composition.

The inorganic filler (F) includes, for example, talc, mica, kaolin, diatomaceous earth, calcium carbonate, calcium sulfate, barium sulfate, glass fibers, carbon fibers, and potassium titanate fibers. Especially preferred for use herein are tabular fillers of, for example, talc and mica, and fibrous fillers. Talc is a magnesium silicate hydrate, and this is available on the market. The inorganic filler such as talc for use herein may have a mean particle size of from 0.1 to 50 µm, but preferably from 0.2 to 20 µm. The inorganic filler, especially talc in the resin composition is effective for further enhancing the stiffness of the moldings of the composition, and, as the case may be, it will be able to reduce the amount of the flame retardant to be in the composition.

The content of the inorganic filler (F) that may be in the resin composition falls between 1 and 100 parts by mass, preferably between 2 and 60 parts by mass relative to 100 parts by mass of the resin mixture of the components (A) and (B). If its amount is smaller than 1 part by mass, the inorganic filler added could not satisfactorily exhibit its effect of enhancing the stiffness and the flame retardancy of the moldings of the composition; but if larger than 100 parts by mass, the impact resistance of the moldings will lower and the melt flowability of the composition will lower. The amount of the inorganic filler to be in the composition may be suitably determined, depending on the necessary properties of the moldings and the moldability of the composition, especially on the thickness of the moldings and the resin flow length of the composition.

In addition to the indispensable components (A), (B) and (C) therein, the flame-retardant polycarbonate resin composition of the invention may contain, if desired, the optional component selected from (D), (E) and (F) that are for improving the moldability of the composition, and any other additives that are generally added to ordinary thermoplastic resins. The additives are for further improving the moldability of the composition and also the impact resistance, the outward appearances, the weather resistance and the stiffness of the moldings of the composition. They include, for example, phenolic, phosphorus-containing or sulfur-containing antioxidants, antistatic agents, polyamide-polyether block copolymers (for permanent static electrification resistance), benzotriazole-type or benzophenone-type UV absorbents, hindered amine-type light stabilizers (weather-proofing agents), plasticizers, microbicides, compatibilizers, and colorants (dyes, pigments). For their amount, the optional additives that may be in the flame-retardant polycarbonate resin composition of the invention are not specifically defined, provided that they do not interfere with the properties of the composition.

Methods for producing the flame-retardant polycarbonate resin composition of the invention are described. The resin composition may be produced by mixing, melting and kneading the components (A) to (C) in a predetermined ratio as above, optionally along with the optional components and additives as above in any desired ratio. Formulating and mixing the constituent components into the intended resin composition may be effected in any known manner, for example, by pre-mixing them in an ordinary device, such as a ribbon blender or a drum tumbler, followed by further kneading the resulting pre-mix in a Banbury mixer, a single-screw extruder, a twin-screw extruder, a multi-screw extruder, or a cokneader. The temperature at which the components are melted and kneaded generally falls between 240 and 300°C. For molding the melt mixture, preferably used is an extrusion molding machine, more preferably a vented extruder. Other constituent components than polycarbonate resin may be previously mixed with polycarbonate resin or with any other thermoplastic resin to prepare a master batch.

Having been prepared in the manner as above, the flame-retardant polycarbonate resin composition of the invention may be molded into various moldings in the melt-molding devices as above, or, after it is pelletized, the resulting pellets may be molded into various moldings through injection molding, injection compression molding, extrusion molding, blow molding, pressing, vacuum forming or foaming. Especially preferably, the composition is pelletized in the melt-kneading manner as above, and the resulting pellets are molded into moldings through injection molding or injection compression molding. For injection molding of the composition, employable is a gas-assisted molding method which is effective for preventing the moldings from having sinking marks and for reducing the mass of the moldings.

Moldings of the flame-retardant polycarbonate resin composition of the invention, especially injection moldings thereof are usable for various housings and parts of electric and electronic appliances, such as duplicators, facsimiles, televisions, radios, tape recorders, video decks, personal computers, printers, telephones, information terminals, refrigerators, and microwave ovens. The moldings have still other applications, and are usable, for example, for automobile parts and machine parts.

In particular, the moldings are favorable for housings and parts of electric and electronic appliances, especially for parts of development units, fixation units and paper receiver units of duplicators or printers.

The invention is described more concretely with reference to the following Examples and Comparative Examples, which, however, are not intended to restrict the scope of the invention.

### Examples 1 to 9, and Comparative Examples 1 to 5:

The components shown in Table 1 were blended in the ratio indicated therein (parts by mass), fed into a vented twin-screw extruder (TEM35 from Toshiba Machine), melted and kneaded therein at 260°C, and then pelletized. To all compositions of Examples and Comparative Examples, added were 0.2 parts by mass of Irganox 1076 (from Ciba Specialty Chemicals) and 0.1 parts by mass of ADK stab C (from Asahi Denka Kogyo) both serving as an antioxidant. The resulting pellets were dried at 120°C for 12 hours, and then molded into test pieces in a mode of injection molding at 280°C (in Examples 1 to 4, and Comparative Examples 1 to 3) or at 260°C (in Examples 5 to 9, and Comparative Examples 4 and 5). The mold temperature was 40°C. While molded, the pellets were monitored for their melt flowability and their deposition on the wall of the mold. The test pieces were tested for their properties in various test methods. The data are given in Table 1.

The molding materials and the additives used herein, and the methods for testing the samples produced are mentioned below.

### [Molding Materials]

### (A) Polycarbonate resin:

PC: Bisphenol A polycarbonate resin having a viscosity-average molecular mass of 19,000 and a melt index (MI) of 20 g/10 min (measured according to JIS K7210 at 300°C under a load of 11.77 N).

### (B) Phosphorus-containing polycarbonate copolymer:

PC copolymer: Bisphenol A-diphenyl carbonate-triphenyl phosphate polycondensate of the following formula (from Johoku Chemical, having a number-average molecular mass of 17, 000 and a phosphorus content of 6.5 % by mass). 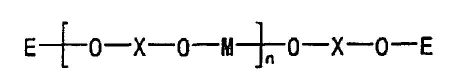 wherein E indicates 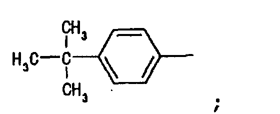
X indicates 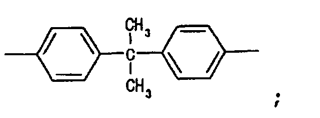
M indicates 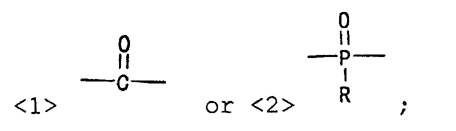
(R indicates 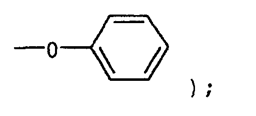 n = 40; and <1>/<2> = 20/80 (by mol).
   (B') Phosphorus-containing flame retardant:
      Bisphenol A bis(diphenyl phosphate) (from Akuzo-Kashima).
   (C) Anti-dripping agent:
      Polytetrafluoroethylene (having the ability to form fibrils), Asahi Glass Fluoropolymers' CD076.
   (D) Rubbery elastomer (core/shell-type, grafted rubbery elastomer):
      Composite rubbery graft copolymer, Mitsubishi Rayon's Metablen S2001 having a polydimethylsiloxane content of at least 50 % by mass.
   (E) Rubber-modified styrene resin:
      HIPS: Idemitsu Petrochemical's high-impact polystyrene, IDEMITSU PS IT44 having a rubber content of 10 % by mass and a melt index (MI) of 20 g/10 min (measured according to JIS K7210 at 200°C under a load of 49.03N).
      ABS: Technopolymer's acrylonitrile-butadiene-styrene copolymer, DP-611 having a melt index (MI) of 2 g/10 min (measured according to JIS K7210 at 200°C under a load of 49.03N).
   (F) Talc:
      Fuji Talc Industrial's TP-A25 having a mean particle size of 5 µm and an aspect ratio of 20.

### [Test Methods]

### 1. Flowability:

SFL (spiral flow length) of the resin melt being molded is measured. Regarding its cross section, the resin melt has a width of 10 mm and a thickness of 2 mm. The temperature of the resin melt is 260°C or 280°C; the mold temperature is 40°C; and the injection pressure is 110 MPa. The data are in terms of cm.

### 2. Mold deposition (Resin deposition on the wall of mold):

After 100 shots of molding test pieces therein, the mold is visually checked for resin deposition on its wall. The resin melt temperature is 260°C, and the mold temperature is 40°C.

### 3. Izod impact strength:

Measured according to ASTM D256 at 23°C or 0°C. The thickness of the test piece is 3.18 mm. The data are in terms of kJ/m².

### 4. Flexural strength, flexural modulus:

Measured according to ASTM D790 at 23°C. The thickness of the test piece is 3.18 mm. The data are in terms of MPa.

### 5. Flame retardancy:

Tested according to the UL94 combustion test. The thickness of the test piece is 1.5 mm. NG samples of V-2 mean that they do not stand the test.

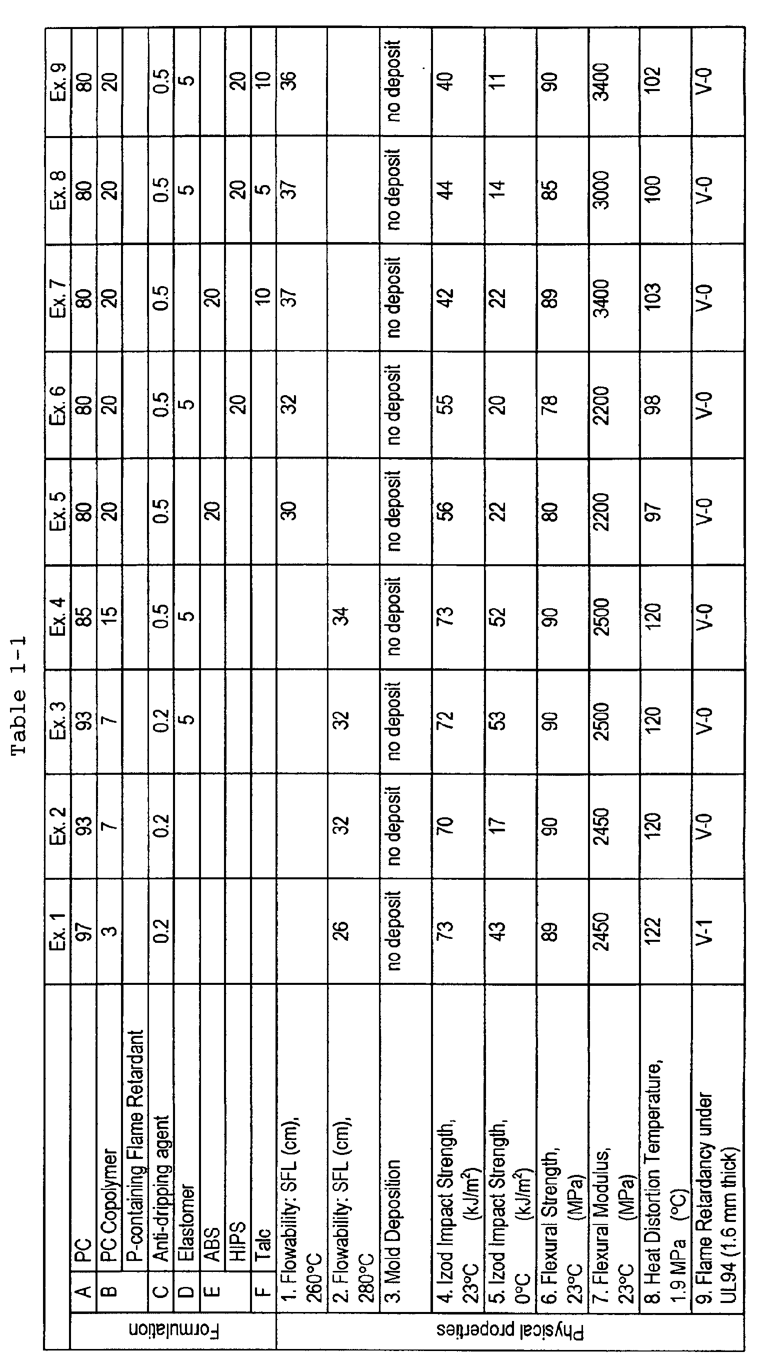

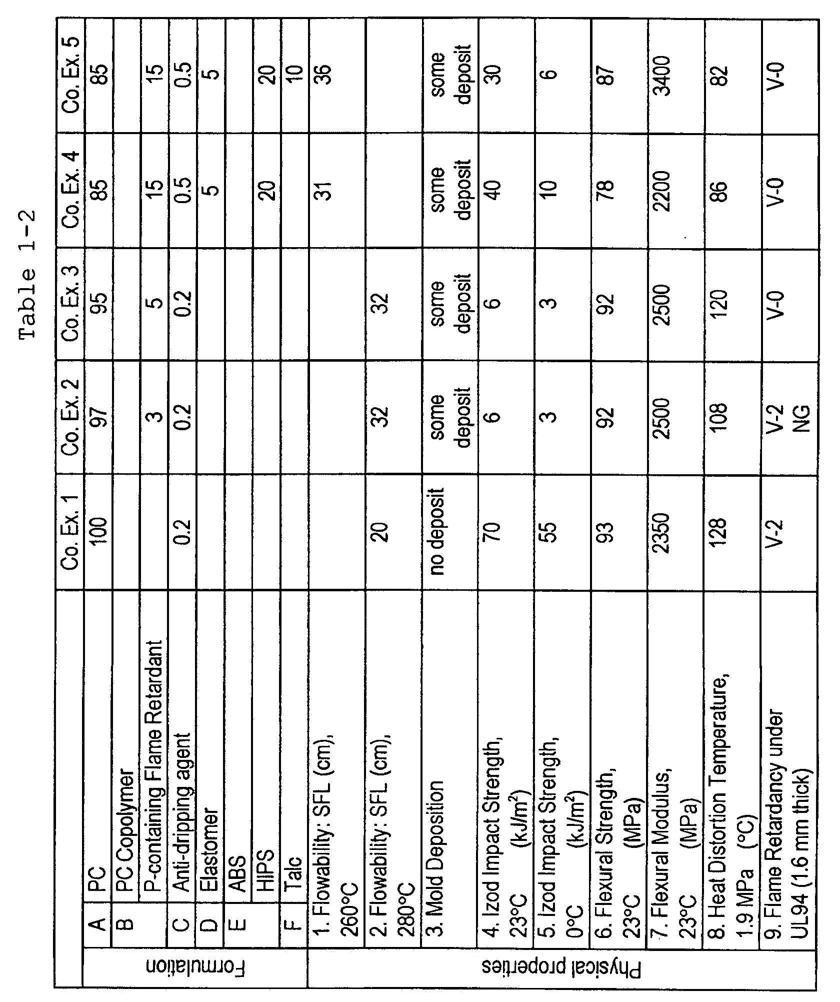

### INDUSTRIAL APPLICABILITY

As is obvious from the data in Table 1, the moldings of the flame-retardant polycarbonate resin composition of the invention are highly resistant to flames. Not depositing on the wall of molds, the melt of the resin composition is well flowable and is stably molded into good moldings, and its long-run workability is good. With any other rubber component, rubber-modified resin and inorganic filler added thereto, the resin moldings may have well controlled impact resistance and stiffness, still having the good properties as above. Accordingly, the applications of the resin composition are expected to expand in various fields of, for example, OA appliances, information appliances, other electric and electronic appliances such as those for household use, automobile parts, etc.

## Claims

1. A flame-retardant polycarbonate resin composition which comprises a resin mixture of (A) from 60 to 99 % by mass of a polycarbonate resin and (B) from 1 to 40 % by mass of a polycarbonate copolymer having phosphorus atoms in its main chain, and contains (C) from 0.02 to 5 parts by mass, relative to 100 parts by mass of the resin mixture, of an anti-dripping agent.

2. The flame-retardant polycarbonate resin composition as claimed in claim 1, wherein the polycarbonate copolymer (B) that has phosphorus atoms in its main chain is an organic phosphate-containing polycarbonate copolymer of the following formula (1): 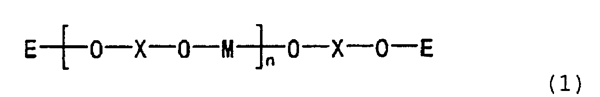 in which X represents a dihydroxy-aromatic residue; E represents a hydrogen atom, or -M-O-Ar; Ar represents an optionally-substituted aryl group; M represents a bonding part of the following formula (2): 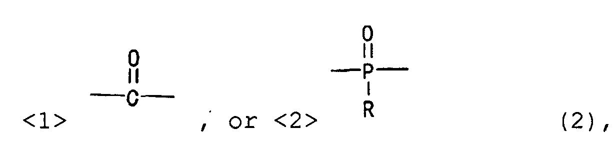 R is selected from an alkyl group having from 1 to 15 carbon atoms, an aryl group having from 6 to 14 carbon atoms, an alkoxy group having from 1 to 30 carbon atoms, and an aryloxy group having from 6 to 14 carbon atoms; the molar ratio of the bonding parts <1> to <2> falls between 95/5 and 5/95; and n falls between 20 and 400.

3. The flame-retardant polycarbonate resin composition as claimed in claim 1 or 2, wherein the anti-dripping agent (C) is at least one member selected from the group consisting of fluororesins, silicone resins and phenolic resins.

4. The flame-retardant polycarbonate resin composition as claimed in any of claims 1 to 3, which further contains (D) from 1 to 30 parts by mass of a rubbery polymer, relative to 100 parts by mass of the resin mixture of (A) and (B) therein.

5. The flame-retardant polycarbonate resin composition as claimed in claim 4, wherein the rubbery polymer (D) is a core/shell-type, grafted rubbery polymer.

6. The flame-retardant polycarbonate resin composition as claimed in any of claims 1 to 5, which further contains (E) from 1 to 40 parts by mass of a styrene resin, relative to 100 parts by mass of the resin mixture of (A) and (B) therein.

7. The flame-retardant polycarbonate resin composition as claimed in any of claims 1 to 6, which further contains (F) from 1 to 100 parts by mass of an inorganic filler, relative to 100 parts by mass of the resin mixture of (A) and (B) therein.

8. Moldings of the flame-retardant polycarbonate resin composition of any of claims 1 to 7.

9. Moldings as claimed in claim 8, which are for housings or parts of electric and electronic appliances.

10. Moldings as claimed in claim 8, which are for parts of development units, fixation units and paper receiver units of duplicators or printers.
